# EUROPÄISCHE PATENTSCHRIFT

(11) **EP 0 413 932 B1**
(45) Veröffentlichungstag und Bekanntmachung des Hinweises auf die Patenterteilung: **12.05.1993**
(21) Anmeldenummer: 90112324.0
(22) Anmeldetag: 28.06.1990
(51) Int. Cl.: B60K 20/02, F16H 59/04

(54) **Schaltvorrichtung für ein Kraftfahrzeuggetriebe**
Gear change device for a vehicle transmission
Dispositif de changement de vitesse pour une transmission de véhicule

(30) Priorität: 24.08.1989 DE 3927922
(43) Veröffentlichungstag der Anmeldung: 27.02.1991
(73) Patentinhaber: Dr.Ing.h.c. F. Porsche Aktiengesellschaft, 70435 Stuttgart (DE)
(72) Erfinder: Maier, Ulrich, D-7141 Freiberg/N. (DE); Raff, Friedrich, D-7147 Eberdingen 3 (DE)

(56) Entgegenhaltungen:
- EP-A- 413 116
- DE-A- 3 231 991
- DE-A- 3 410 938
- DE-A- 3 714 285
- DE-A- 3 807 881
- DE-A- 3 905 769

## Beschreibung

Die Erfindung betrifft eine Schaltvorrichtung für ein Kraftfahrzeuggetriebe nach dem Oberbegriff des Anspruchs 1.

Ein derartiges Kraftfahrzeuggetriebe ist in der DE-A-3807881 (Anmeldetag 10.3.88, Offenlegungstag 21.9.89)beschrieben. Es vereinigt in sich die Vorteile eines herkömmlichen Automatikgetriebes und eines manuell zu schaltenden Zahnradgetriebes. Beim Verschwenken des Wählhebels in einer ersten Schaltgasse lassen sich die verschiedenen Wählstellungen eines Automatikgetriebes vorwählen. Wird der Wählhebel über eine Quergasse in eine zur ersten Schaltgasse parallele zweite Schaltgasse umgeschaltet, so lassen sich mit ihm durch Verschwenken in dieser zweiten Schaltgasse die Vorwärtsgänge des Getriebes direkt schalten, was für eine sportliche Fahrweise von Vorteil ist.

Es ist die Aufgabe der Erfindung, eine Schaltvorrichtung für ein solches Kraftfahrzeuggetriebe zu entwerfen, die eine hohe Formsteifigkeit aufweist. Außerdem wird Wert auf eine ergonomische Gestaltung und kostengünstige Fertigung und Montage gelegt.

Zur Lösung dieser Aufgabe dienen die kennzeichnenden Merkmale des Anspruchs 1. Wenn die Lagerstellen des Wählhebels beidseitig in einem an der Kraftfahrzeugkarosserie befestigten Hohlrahmen ausgebildet sind, läßt sich eine formstabile und vibrationsfreie Lagerung des Wählhebels erzielen. Da der Hohlrahmen aus einem topfförmigen, gegossenen Unterteil und einem oben aufgesetzten, abnehmbaren Deckel besteht, bereitet die Montage des Wählhebels und seiner Lagerungen in dem Hohlrahmen keinerlei Schwierigkeiten.

Weitere, die Formsteifigkeit der Schaltvorrichtung verbessernde und die Bedienung des Wählhebels erleichternde Merkmale sind in den Unteransprüchen angegeben.

Ein Ausführungsbeispiel der Erfindung ist in der Zeichnung dargestellt und wird nachfolgend erläutert.

Es zeigen:

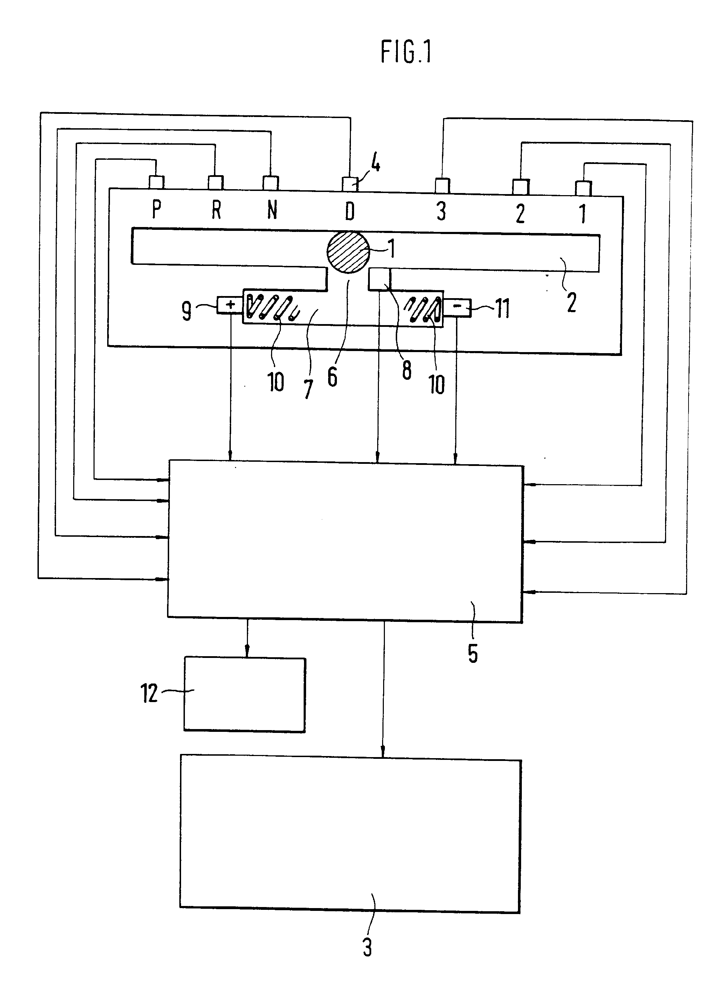

- Fig. 1: Getriebe- Steuersystem mit Schaltvorrichtung,
- Fig. 2: Schaltvorrichtung im Längsschnitt,
- Fig. 3: Schaltvorrichtung im Querschnitt,
- Fig. 4: Schnitt nach der Linie IV-IV der Fig. 3.

Mit einem Wählhebel 1, der in einer ersten Schaltgasse 2 in Längsrichtung des Kraftfahrzeugs verschwenkbar ist, sind die verschiedenen Stellungen P = Parken, R = Rückwärtsgang, N = Neutral-Null, D = Drive mit 4. Gang, 3 = 3. Gang, 2 = 2. Gang, 1 = 1. Gang eines automatischen Getriebes 3 anwählbar. Die Wählstellungen werden durch Sensoren 4 erfaßt, die elektrische Signale an ein Steuergerät 5 des Getriebes 3 geben. Aus der Wählstellung D heraus ist der Wählhebel 1 über eine Quergasse 6 in eine zur ersten Schaltgasse 2 parallele zweite Schaltgasse 7 umschaltbar. Der Umschaltvorgang wird durch einen Sensor 8 erfaßt, der dabei ein Signal an das Steuergerät 5 liefert.

Beim Verschwenken des Wählhebels 1 in der zweiten Schaltgasse 7 in Fahrtrichtung des Kraftfahrzeugs spricht ein Plus-Sensor 9 an, dessen Signal das Steuergerät veranlaßt, am Getriebe 3 eine Hochschaltung um einen Gang vorzunehmen. Danach wird der Wählhebel 1 durch eine Feder 10 in die neutrale Mittellage der Schaltgasse 7 zurückgedrückt. Beim nochmaligen Antippen am Sensor 9 erfolgt eine weitere Hochschaltung um einen Gang, falls nicht bereits der höchste Getriebegang eingelegt ist. Beim Verschwenken des Wählhebels entgegen der Fahrtrichtung gibt ein Minus-Sensor 11 ein Signal an das Steuergerät 1 und löst am Getriebe 3 eine Rückschaltung um einen Gang aus. An das Steuergerät 5 ist ein optisches Anzeigegerät 12 angeschlossen, das die Wählstellungen in der ersten Schaltgasse 2 und den jeweils eingelegten Getriebegang 1, 2, 3 oder 4 anzeigt.

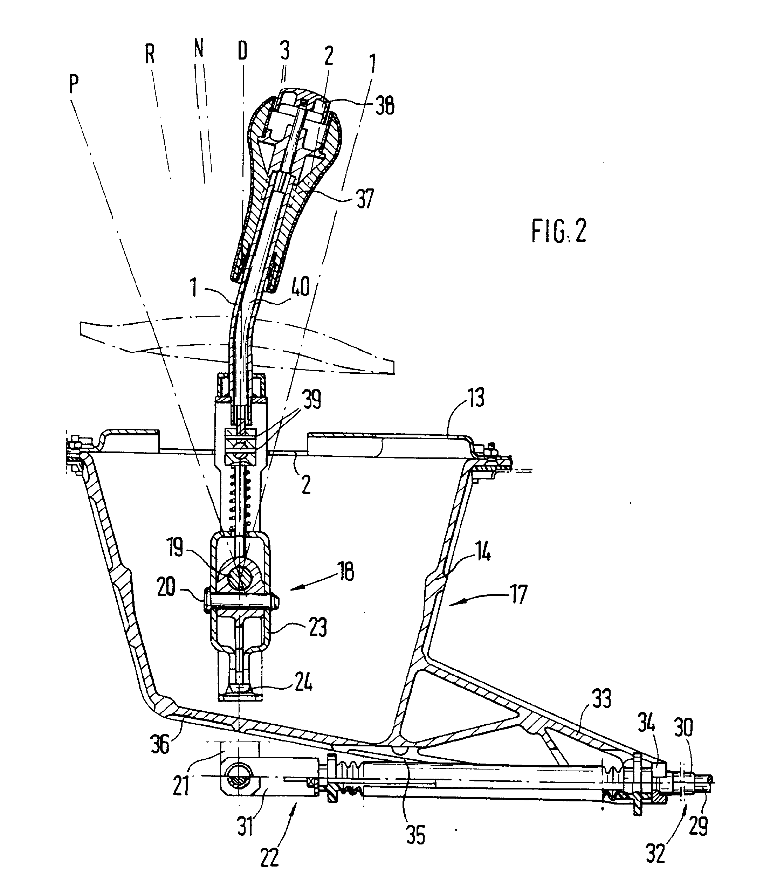

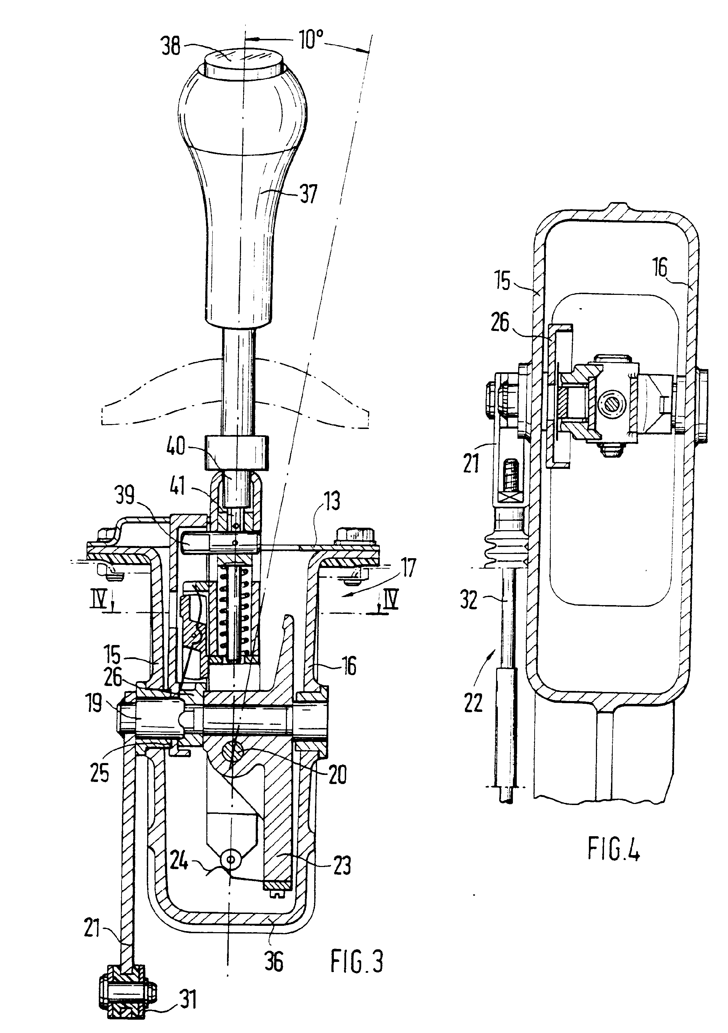

Die konstruktive Ausführung der Schaltvorrichtung ist in Fig. 2 und Fig. 3 dargestellt.

Die in Längsrichtung des Kraftfahrzeugs verlaufende erste Schaltgasse 2 und zweite Schaltgasse 7 sowie die Quergasse 6 sind als Kulissen für den Wählhebel 1 in einer Deckplatte 13 ausgebildet. Die Deckplatte 13 ist auf ein topfförmiges Unterteil 14 geschraubt, dessen Wandungen durch Rippen versteift sind. Die Deckplatte 13 und das Unterteil 14 bilden zusammen einen Hohlrahmen 17, der an der Karosserie des Kraftfahrzeugs befestigt ist. Das Unterteil 14 ist im Längsschnitt (Fig. 2) trapezförmig, im Querschnitt (Fig. 3) rechteckig gestaltet. Der in den Hohlrahmen 17 hineinragende Teil des Wählhebels 1 ist mit einem Kardangelenk 18 verbunden, um dessen zwei quer zueinanderliegende Lagerbolzen 19 und 20 der Wählhebel 1 schwenkbar ist.

Der obere Lagerbolzen 19 ist in den beiden Seitenwänden 15 und 16 des Unterteiles 14 gelagert. Um ihn ist der Wählhebel zur Ausführung der Wählstellungen P, R, N, D, 3, 2, 1 schwenkbar. Hierzu ist von der mittleren Wählstellung D aus in Fahrtrichtung des Kraftfahrzeugs ein Schwenkwinkel von insgesamt 34,6° in Gegenrichtung ein Schwenkwinkel von 28,2° vorgesehen. Beim Verschwenken wird ein außerhalb des Hohlrahmens am Lagerbolzen 19 befestigter Betätigungshebel 21 mitgenommen, der über ein an ihm angelenktes Betätigungsgestänge 22 in das Getriebe 3 eingreift, und die dort befindlichen Sensoren 4 für die Wählstellungen P, R, N, D, 3, 2, 1 betätigt.

Am unteren Bereich des Wählhebels 1 ist mit ihm ein Gelenkrahmen 23 verbunden, der bei Ausführung der Wählstellungen mit verschwenkt wird. Im Gelenkrahmen 13 ist unterhalb des Lagerbolzens 19 der Lagerbolzen 20 gelagert, um den der Wählhebel 1 beim Umschalten von der ersten Schaltgasse 2 zur zweiten Schaltgasse 7 schwenkbar ist. Der hierzu erforderliche Schwenkwinkel beträgt ca. 10°. Durch eine an der Unterseite des Wählhebels 1 wirkende, am Gelenkrahmen 23 befestigte Federraste 24 werden die Umschaltstellungen des Wählhebels arretiert. Wird der Wählhebel 1 aus Stellung D heraus durch die Quergasse 6 hindurch in die zweite Schaltgasse 7 umgeschaltet, so wird die Verbindung zu dem auf dem Lagerbolzen 19 mit einer Stirnverzahnung 25 drehfesten Mitnahmestück 26 gelöst, um die in der zweiten Schaltgasse 7 auszuführenden Wippbewegungen nicht auf die im Getriebe 3 befindlichen Wählstellungs-Sensoren 4 zu übertragen.

Ein Verschwenken des Wählhebels in der zweiten Schaltgasse 7 von ca. 5° reicht aus, um den Plus-Sensor 9 bzw. in Gegenrichtung den Minus-Sensor 11 ansprechen zu lassen und am Getriebe 3 eine Hochschaltung oder eine Rückschaltung um einen Gang auszulösen. Der Plus-Sensor 9 und der Minus-Sensor 11 und der das Umschalten erfassende Sensor 8 sind als elektromechanische Mikroschalter ausgebildet und in einem Schaltgehäuse untergebracht, das oben auf der Deckplatte 13 angeschraubt ist.

Das zum Getriebe führende Betätigungsgestänge 22 besteht aus einem an den Betätigungshebel 21 angelenkten Gabelkopf 31 und einem an ihm befestigten Bowdenzug 32, der Zug- und Druckkräfte übertragen kann, ohne auszuknicken.

Der Bowdenzug 32 ist zusammengesetzt aus einem Drahtseil 29, das Zug- und Druckkräfte übertragen kann und einer es in Längsrichtung führenden Hülle 30. Die Hülle 30 ist in der Lagerstelle 34 festgelegt, die am freien Ende eines am Unterteil 14 angegossenen Auslegers 33 angebracht ist.

Der Ausleger 33 ist durch Rippen versteift und bildet mit dem Unterteil 14 ein Gußstück aus Leichtmetall. Die Unterseite 35 des Auslegers 33 liegt bündig in Verlängerung des Bodens 36 des Unterteils 14.

Um bei vorgegebener Lage des Betätigungsgestänges 22 und der Lagerung des Wählhebels 1 im Hohlrahmen 17 das Griffstück 37 des Wählhebels 1 an einer für den Fahrer ergonomisch günstigen Stelle zu platzieren, ist der Wählhebel 1 im oberen Bereich entgegen der Fahrtrichtung mit einem Winkel von ca. 15° abgeknickt. Dadurch wird es nötig , das Verbindungsglied von einem im Griffstück 37 längsgeführten Entriegelungsknopf 38 zu einer Verriegelungsvorrichtung 39 für die jeweilige Gangwählstellung biegeelastisch zu gestalten. Zugleich muß das Verbindungsglied in der Lage sein, Druckkräfte zu übertragen, ohne auszuknicken. Beide Forderungen lassen sich erfüllen mit einem speziellen, auf Druck beanspruchbaren Bowdenzug 40, dessen Drahtseil 41 oben mit dem Entriegelungsknopf 38, unten mit der Verriegelungsvorrichtung 39 verbunden ist.

## Patentansprüche

1. Schaltvorrichtung für ein durch ein elektronisches Steuergerät gesteuertes automatisches Getriebe eines Kraftfahrzeugs, mit einem Wählhebel, durch dessen Verschwenken in einer ersten Schaltgasse die verschiedenen automatisch zu schaltenden Getriebegänge vorwählbar sind, wobei der Wählhebel über eine Quergasse in eine zur ersten Schaltgasse parallele zweite Schaltgasse umschaltbar ist, und mit dem Wählhebel durch Verschwenken in der zweiten Schaltgasse die Getriebegänge manuell schaltbar sind, dadurch gekennzeichnet, daß der Wählhebel (1) in einem Hohlrahmen (17) gelagert ist, der aus einem topfförmigen, aus Leichtmetall gegossenen Unterteil (14) und einer oben an ihm angeschraubten Deckplatte (13) zusammengesetzt ist, wobei das Unterteil (14) im Längsschnitt trapezförmig, im Querschnitt rechteckig gestaltet ist.

2. Schaltvorrichtung nach Anspruch 1, dadurch gekennzeichnet, daß an der Außenseite des Unterteils (14) ein Ausleger (33) angebracht ist, der an seinem freien Ende eine Lagerstelle (34) für ein mit dem Wählhebel (1) längsverschiebliches, zum Fahrzeuggetriebe führendes Betätigungsgestänge (22) aufweist.

3. Schaltvorrichtung nach Anspruch 2, dadurch gekennzeichnet, daß das Unterteil (14) einstückig mit dem Ausleger (33) aus Leichtmetall gegossen ist.

4. Schalttvorrichtung nach Anspruch 3, dadurch gekennzeichnet, daß sich der Ausleger (33) vom Unterteil (14) zur Lagerstelle (34) hin konisch verjüngt und durch Rippen versteift ist.

5. Schaltvorrichtung nach Anspruch 3, dadurch gekennzeichnet, daß die Unterseite (35) des Auslegers (33) bündig verläuft in Verlängerung zum Boden (36) des Unterteils (14).

6. Schaltvorrichtung nach Anspruch 2, dadurch gekennzeichnet, daß das Betätigungsgestänge (22) aus einem Gabelkopf (31) und einem in der Lagerstelle (34) längsgeführten, auf Zug und Druck beanspruchbaren Bowdenzug (32) besteht.

7. Schaltvorrichtung nach Anspruch 1, dadurch gekennzeichnet, daß der Wählhebel (1) im oberen Bereich entgegen der Fahrtrichtung abgewinkelt ist.

8. Schaltvorrichtung nach Anspruch 7, dadurch gekennzeichnet, daß ein im Griffstück (37) des Wählhebels (1) längsbeweglicher Entriegelungsknopf (38) mittels eines auf Druck beanspruchbaren, zentrisch im Wählhebel (1) verlaufendenden Bowdenzugs (40) mit der Verriegelungsvorrichtung (39) für die einzelnen Wählstellungen verbunden ist.

## Claims

1. A gear-shift device.for an automatic transmission - controlled by an electronic control means - of a motor vehicle, having a selector lever, by the pivoting of which in a first gear-shift channel the different gears to be automatically shifted are pre-selectable, it being possible for the selector lever to be changed over into a second gear-shift channel parallel to the first gear-shift channel by way of a transverse channel, and the gears being manually shiftable by the selector lever by pivoting into the second gear-shift channel, **characterized in that** the selector lever (1) is mounted in a hollow frame (17) comprising a cup-shaped lower part (14) cast from light metal and a cover plate (13) screwed to the top thereof, the lower part (14) being made trapezoidal in longitudinal section and rectangular in cross-section.

2. A gear-shift device according to Claim 1, **characterized in that** a bracket (33), the free end of which has a bearing point (34) for an actuating rod system (22) longitudinally displaceable with the selector lever (1) and leading to the vehicle transmission, is attached to the outside of the lower part (14).

3. A gear-shift device according to Claim 2, **characterized in that** the lower part (14) is cast integrally with the bracket (33) from light metal.

4. A gear-shift device according to Claim 3, **characterized in that** the bracket (33) tapers inwardly from the lower part (14) towards the bearing point (34) and is reinforced by ribs.

5. A gear-shift device according to Claim 3, **characterized in that** the underside (35) of the bracket (33) extends flush as a continuation of the base (36) of the lower part (24).

6. A gear-shift device according to Claim 2, **characterized in that** the actuating rod system (22) comprises a fork head (31) and a Bowden cable (32) which is guided longitudinally in the bearing point (34) and which can be acted upon by tension and pressure.

7. A gear-shift device according to Claim 1, **characterized in that** the selector lever (1) is angled in the upper region contrary to the direction of travel.

8. A gear-shift device according to Claim 7, **characterized in that** a release button (38) movable longitudinally in the handle (37) of the selector lever (1) is connected to the locking device (39) for the individual selector settings by means of a Bowden cable (40) which can be acted upon by pressure and which extends centrally in the selector lever (1).

## Revendications

1. Dispositif de changement de vitesse pour une transmission automatique de véhicule commandée par une unité de commande électronique, comprenant un levier de sélection au moyen duquel, en le faisant pivoter, on peut sélectionner à l'avance dans un premier canal de changement de vitesse les diverses vitesses à changement automatique, le levier de sélection pouvant être amené par l'intermédiaire d'un passage transversal dans un second canal de changement de vitesse qui est parallèle au premier, les vitesses de la transmission pouvant être changées manuellement en faisant pivoter le levier de sélection dans le second canal de changement de vitesse, caractérisé en ce que le levier de sélection (1) est monté dans un cadre creux (17) constitué par l'assemblage d'une partie inférieure (14) en forme de pot et coulée en métal léger et d'une plaque de recouvrement (13) fixée sur elle par le haut, la partie inférieure (14) étant de forme trapézoïdale en section longitudinale et rectangulaire en section transversale.

2. Dispositif de changement de vitesse selon la revendication 1, caractérisé en ce qu'un bras (33) est monté sur le côté extérieur de la partie inférieure (14), ce bras comprenant à son extrémité libre un point d'appui (34) destiné à une timonerie d'actionnement (22) allant à la transmission du véhicule et pouvant être déplacée longitudinalement par le levier de sélection (1).

3. Dispositif de changement de vitesse selon la revendication 2, caractérisé en ce que la partie inférieure (14) est coulée en métal léger d'un seul tenant avec le bras (33).

4. Dispositif de changement de vitesse selon la revendication 3, caractérisé en ce que le bras (33) va en se réduisant sous une forme conique depuis la partie inférieure (14) jusqu'au point (34) et est rendue rigide par des nervures.

5. Dispositif de changement de vitesse selon la revendication 3, caractérisé en ce que le côté inférieur (35) du bras (33) est raccordé directement au fond (36) de la partie inférieure (14) et en prolongement avec lui.

6. Dispositif de changement de vitesse selon la revendication 2, caractérisé en ce que la timonerie d'actionnement (22) est constituée par une chape (31) et un câble Bowden (32) guidé longitudinalement dans le point d'appui (34) et pouvant être sollicité en traction et en pression.

7. Dispositif de changement de vitesse selon la revendication 1, caractérisé en ce que le levier de sélection (1) est coudé dans sa partie supérieure dans le sens inverse à celui de la marche.

8. Dispositif de changement de vitesse selon la revendication 7, caractérisé en ce qu'une tête de déverrouillage (38) pouvant se déplacer longitudinalement dans la poignée (37) du levier de sélection (1) est reliée à un dispositif de verrouillage (39) des positions de sélection individuelles au moyen d'un câble Bowden (30) pouvant être sollicité en pression et passant au centre du levier de sélection (1).
